# EUROPÄISCHE PATENTSCHRIFT

(11) **EP 3 012 470 B1**
(45) Veröffentlichungstag und Bekanntmachung des Hinweises auf die Patenterteilung: **21.02.2018**
(21) Anmeldenummer: 14190285.8
(22) Anmeldetag: 24.10.2014
(51) Int. Cl.: F16B 37/06

(54) **Mutter zur Befestigung an einem Blech**
Nut for mounting on a metal sheet
Écrou de fixation sur une tôle

(43) Veröffentlichungstag der Anmeldung: 27.04.2016
(73) Patentinhaber: NEDSCHROEF PLETTENBERG GmbH, 58840 Plettenberg (DE)
(72) Erfinder: Hirschfeld, Henning, 58840 Plettenberg (DE); Klösters, Frank, 58515 Lüdenscheid (DE)
(74) Vertreter: Patentanwälte Dörner & Kötter PartG mbB

(56) Entgegenhaltungen:
- WO-A1-01/03881
- DE-A1- 10 348 851
- US-A- 3 961 412
- US-A- 5 782 594

## Beschreibung

Die Erfindung betrifft eine Mutter zur Befestigung an einem Blech nach dem Oberbegriff des Patentanspruchs 1. Eine solche Mutter ist aus der DE 103 48 851 A bekannt.

Die Erfindung betrifft weiterhin eine Muttern-Blech-Verbindung mit einer solchen Mutter nach dem Patentanspruch 7. Zur Verbindung von Muttern mit einem Blech sind unterschiedliche Lösungen bekannt. So kommen beispielsweise Stanzmuttern zum Einsatz, wie sie unter anderem aus der DE 36 26 466 bekannt sind. Eine solche Stanzmutter wird in ein nicht vorgelochtes Blech eingepresst und wirkt dabei als Stanzstempel, der einen Butzen aus dem Blech ausstanzt. Die Gegenkraft wird dabei von einer Matrize aufgebracht, die das Blech auf der der Stanzmutter gegenüberliegenden Seite um den auszustanzenden Butzen herum abstützt. Stanzmuttern bei denen während des Einpressvorgangs der Mutter in das Blech ausschließlich das Blech, nicht aber die Mutter selbst verformt wird, sind von den ähnlich gestalteten so genannten Nietmuttern zu unterscheiden, bei denen während des Einpressvorgangs auch die Mutter, teilweise zusätzlich zum Blech, zumeist im freien Ende des Schaftbereichs verformt wird.
Vor dem Hintergrund der aktuellen Blechentwicklung hin zu immer dünneren Blechen erweisen sich die vorbekannten Lösungen als nur bedingt geeignet. Bei Dünnblechen mit Blechstärken von weniger als 1,5 mm werden häufig Nietmuttern verwendet, die einen hohen zeitlichen Montageaufwand benötigen. Hier will die Erfindung Abhilfe schaffen. Der Erfindung liegt die Aufgabe zu Grunde, eine Mutter zu Befestigung an einem Blech, insbesondere an einem Dünnblech mit Blechstärken von ≤ 1,5 mm bereitzustellen, die eine zeit-und aufwandminimierte Befestigung an einem Blech ermöglicht. Gemäß der Erfindung wird diese Aufgabe durch die Merkmale des kennzeichnenden Teils des Patentanspruchs 1 gelöst.

Mit der Erfindung ist eine Mutter zu Befestigung an einem Blech geschaffen, die eine zeit- und aufwandminimierte Befestigung an dem Blech ermöglicht. Dadurch, dass dem Innengewinde vorgelagert eine gegenüber dem Kerndurchmesser des Innengewindes durchmesservergrößerte Befestigungskontur zur Aufnahme vom Blechmaterial angeordnet ist, ist eine Blechverbindung durch Einformung von Blechmaterial in den Mutternkörper hinein ermöglicht. Die Verbindung von Blech und Mutter wird durch das in Art eines Kragens in den Mutterkörper eingeführte Blechmaterial, das gegen die Befestigungskontur gepresst wird, erzielt. Der Mutternkörper kann sowohl einen runden sowie auch einen mehrkantförmigen Querschnitt aufweisen. Weiterhin kann der Mutternkörper auch endseitig mit einem Flansch versehen sein, wodurch die Anlagefläche an dem Blech vergrößert ist. Das mit der Mutter zu verbindende Blech kann auch als Mehrschicht- beziehungsweise Sandwichblech ausgebildet sein. Weiterhin kann die Mutter auch zum Zwecke der Verbindung von zwei oder mehr Blechen eingesetzt werden. Gemäß der Erfindung weist die Befestigungskontur einen Pressabschnitt auf, der in einen gegenüber dem Pressabschnitt durchmesserverminderten Auslaufabschnitt übergeht. Hierdurch ist eine große Anlagefläche für den einzubringenden Blechkragen bereitgestellt, wodurch eine gute Verbindung zwischen Mutter und Blech erzielt ist. Überschüssiges verdrängtes Blechmaterial kann von dem Auslaufabschnitt aufgenommen werden, ohne dass die Schraubengängigkeit der Mutter beeinträchtigt wird.

In weiterer Ausgestaltung der Erfindung ist zwischen dem Pressabschnitt und dem Auslaufabschnitt ein Absatz ausgebildet. Hierdurch ist der Kraft-Formschluss zwischen Mutter und Blech weiter verbessert. Dabei ist der Absatz bevorzugt als konisch in Richtung des Außenmantels des Mutternkörpers geneigte Ringfläche ausgebildet, wodurch die Festigkeit der Verbindung zwischen Mutter und Blech weiter verbessert ist.

In Weiterbildung der Erfindung ist der Pressabschnitt zylindrisch ausgebildet. Hierdurch ist die Herstellung des Mutternkörpers vereinfacht. Gemäß der Erfindung weist die Befestigungskontur einen sich konisch in Richtung des Innengewindes verjüngenden Zentrierabschnitt auf, der sich an das Innengewinde anschließt. Hierdurch ist eine gute Zentrierung des Umformungsstempels relativ zur Mutter ermöglicht.
In weiterer Ausgestaltung der Erfindung ist der Auslaufabschnitt und/oder der Pressabschnitt zumindest bereichsweise mit einer Verzahnung versehen. Hierdurch ist eine weitere Erhöhung der Festigkeit der Verbindung zwischen Mutter und Blech erzielbar.
In Weiterbildung der Erfindung ist der Mutternkörper an seiner dem Innengewinde abgewandten Anlagefläche mit einer Verzahnung oder Verrippung versehen. Hierdurch ist eine erhöhte Drehfestigkeit zwischen Mutter und Blech erzielbar.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

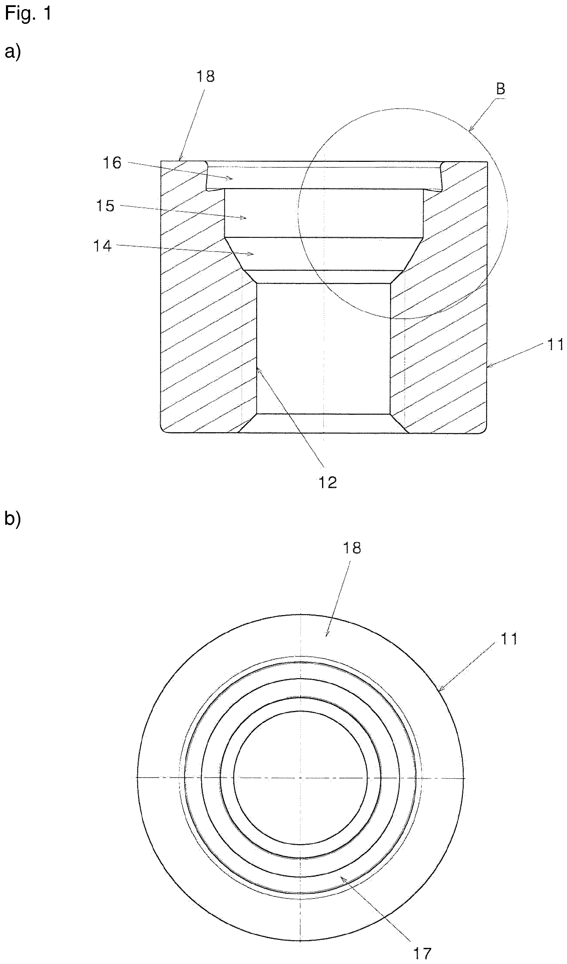

- Figur 1: die schematische Darstellung einer Mutter
a) im Längsschnitt;
b) in der Draufsicht;
c) in Detaildarstellung des Ausschnitts "B";
- Figur 2: die schematische Darstellung eines Werkzeugs zur Verbindung der Mutter gemäß Figur 1 mit einem Blech nach dem Stanzprozess;
- Figur 3: die Darstellung des Werkzeugs nach Figur 2 nach dem Umformprozess;
- Figur 4: die Ansicht einer Muttern-Blech-Verbindung
a) im Längsschnitt;
b) in der Draufsicht.

Die als Ausführungsbeispiel gewählte Mutter 1 besteht im Wesentlichen aus einem hohlzylindrischen Mutternkörper 11, der ein Innengewinde 12 aufweist.

Die Außenkontur der Mutter 1 entspricht einer gängigen, im Stand der Technik bekannten Kontur für eine lagegerechte Zuführung. An das Innengewinde 12 schließt sich eine durch eine Aussenkung gebildete Befestigungskontur 13 an. Die Befestigungskontur 13 umfasst einen konisch sich erweiternden Zentrierabschnitt 14, an den sich ein zylindrisch ausgebildeter Auslaufabschnitt 15 anschließt, der in einen ebenfalls zylindrisch ausgebildeten durchmessererweiterten Pressabschnitt 16 übergeht. Zwischen Auslaufabschnitt 15 und Pressabschnitt 16 ist ein Absatz 17 gebildet, der radial nach außen geneigt ausgebildet ist, so dass eine konisch sich nach innen verjüngende Ringfläche gebildet ist. Der Auslaufabschnitt 15 ist im Ausführungsbeispiel mit einer - nicht dargestellten - Verrippung versehen. An seiner dem Innengewinde 12 entgegen gerichteten Anlagefläche 18 ist der Mutternkörper 11 im Ausführungsbeispiel weiterhin mit einer - nicht dargestellten - Sperrverzahnung versehen. Die Tiefe der Aussenkung und damit der Befestigungskontur 13 ist auf den Durchmesser des Innengewindes 12 abgestimmt.

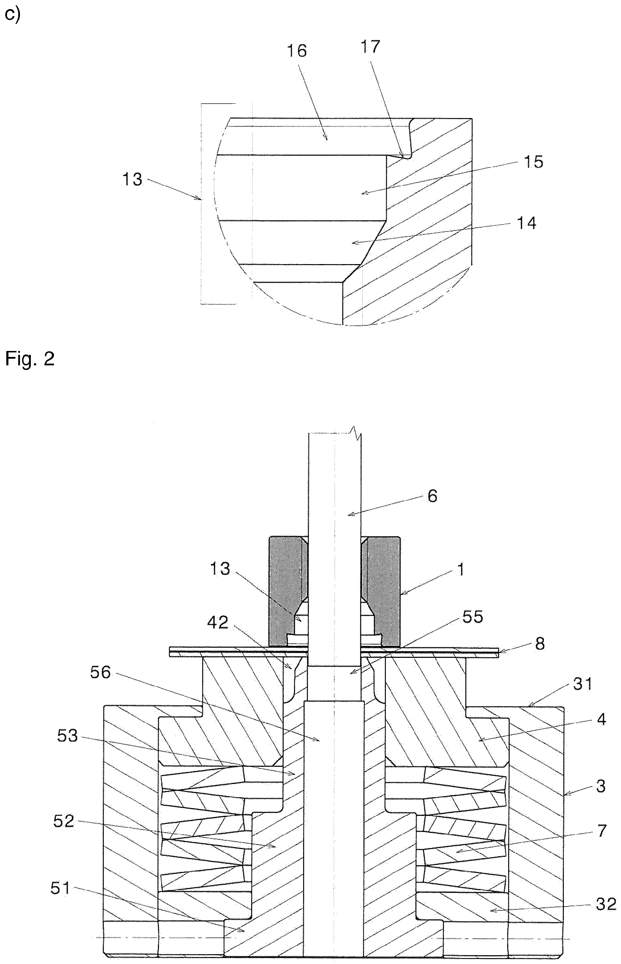

In Figur 2 ist ein Werkzeug zur Verbindung der zuvor beschriebenen Mutter mit einem Blech 8 gezeigt. Das Werkzeug 2 umfasst ein Gehäuse 3, in dem ein Auflageblock 4 über eine Feder 7 gelagert ist. Der Auflageblock 4 ist von einem Umformstempel 5 durchdrungen, in dessen Durchgangsbohrung 55 ein Stanz- und Zentrierstempel 6 hineinbewegbar ist.

Das Gehäuse 3 ist im Wesentlichen hohlzylindrisch ausgebildet. An seiner Oberseite ist das Gehäuse 3 durchmesservermindert ausgeführt, wodurch ein Anschlag 31 zur Anlage des Auflagebocks 4 gebildet ist. An seinem dem Anschlag 31 gegenüberliegenden Ende ist in dem Gehäuse 3 eine Ringplatte 32 angeordnet. Die Ringplatte 32 dient sowohl der Auflage einer Feder 7 sowie der Anlage des Umformstempels 5, von dem diese durchdrungen ist.

Der Auflageblock 4 ist im Wesentlichen zylinderförmig ausgebildet und weist an seinem der Ringplatte 32 zugewandten Ende einen flanschartig umlaufend angeformten Kragen 41 auf. Mittig ist der Auflagebock 4 von einer Bohrung 42 durchdrungen.

Der Umformstempel 5 ist rotationssymmetrisch ausgebildet und weist eine stufenförmig durchmesserreduzierte Außenkontur auf, wodurch drei Abschnitte 51, 52, 53 mit jeweils unterschiedlichen Außendurchmessern gebildet sind. Der dem Auflageblock 4 entgegengerichtete, untere Abschnitt 51 weist einen Außendurchmesser auf, der größer ist, als der Innendurchmesser der Ringplatte 32, der im Wesentlichen dem Außendurchmesser des mittleren Abschnitts 52 entspricht, der die Ringplatte 32 durchdringt. Der Außendurchmesser des dem Auflagebock 4 zugewandten oberen Abschnitts 53 entspricht im Wesentlichen dem Innendurchmesser der Bohrung 42 des Auflageblocks 4, in den dieser hineinragt. Der Umformstempel 5 ist mit seinem oberen Ausschnitt 53 in der Bohrung 42 des Auflageblocks 4 geführt. Endseitig ist an dem oberen Abschnitt 53 eine auf die Befestigungskontur 13 des Mutternkörpers 11 der Mutter 1 abgestimmte Stempelmatrize 54 angeformt. Entlang seiner Rotationsachse ist in den Umformstempel 5 eine Durchgangsbohrung 55 eingebracht, die unterhalt der Stempelmatrize 54 durchmesservergrößert ausgebildet ist, wodurch ein Stanzbutzenkanal 56 gebildet ist.

Oberhalb des Gehäuses 3 ist ein vertikal bewegbarer Schubstempel 9 angeordnet, indem der Stanz- und Zentrierstempels 6 vertikal relativ zu dem Schubstempel 9 bewegbar angeordnet ist. Der Stanz- und Zentrierstempel 6 ist im Wesentlichen zylindrisch ausgebildet und weist einen Außendurchmesser auf, der im Wesentlichen dem Kerndurchmesser des Innengewindes 12 der Mutter 1 entspricht. An seinem dem Gehäuse 3 zugewandten Ende ist der Stanz- und Zentrierstempels 6 mit einer kreisringförmige Stanzkontur versehen.

Zur Befestigung der Mutter 1 an einem Blech 8, dass im Ausführungsbeispiel als Sandwichblech ausgebildet ist, wird das Blech 8 zunächst auf dem Auflageblock 4 positioniert, wonach auf dem Blech 8 eine Mutter 1 mit ihrer Anlagefläche 18 auf dem Blech 8 aufgestellt wird. Nachfolgend wird der Schubstempel 9 vertikal auf die Mutter 1 gefahren, wobei der Stanz- und Zentrierstempel 6 in das Innengewinde 12 bzw. den von dem Innengewinde 12 begrenzten Durchgang eingebracht wird, wodurch die Mutter auf dem Blech radial fixiert wird. Durch den Schubstempel 9 wird die Mutter 1 gegen das Blech 8 gedrückt und der Stanz- und Zentrierstempel 6 wird aus dem Schubstempel 9 weiter herausgefahren und in die Durchgangsbohrung 55 des Umformstempels 5 bewegt, wodurch ein kreisrunder Stanzbutzen aus dem Blech 8 gebrochen wird, der durch den Stanzbutzenkanal 56 des Umformstempels 5 herausfällt. Durch einen weiteren Vorschub des Schubstempels 9 wird der Auflageblock 4 entgegen der Vorspannkraft der Feder 7 bewegt, wodurch die Mutter 1 mit ihrer Befestigungskontur 13 auf die Stempelmatrize 54 des Umformstempels 5 bewegt wird. Hierbei wird das im Bereich des in das Blech 8 eingestanzten Loches befindliche Blechmaterial kragenförmig durch die Stempelmatrize 54 umgeformt und an die Befestigungskontur 13 des Mutternkörpers 11 angepresst, wodurch die Verbindung von Blech 8 und Mutter 1 erzielt ist. Nachfolgend wird der Schubstempel 9 nach oben gefahren, wodurch über die Rückstellkraft der Feder 7 der Auflageblock 4 gegen den Anschlag 31 des Gehäuses 3 verfahren wird. Nachfolgend wird bei weiterem Verfahren des Schubstempels 9 der Stanz- und Zentrierstempel 6 aus dem Innengewinde 12 der Mutter 11 herausbewegt. Das mit der Mutter 1 verbundene Blech 8 kann nun entnommen werden.

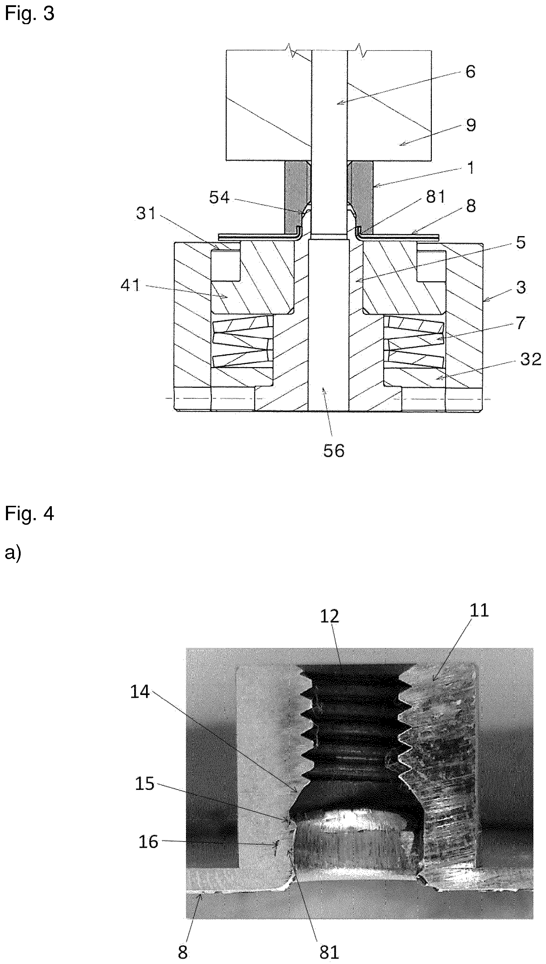

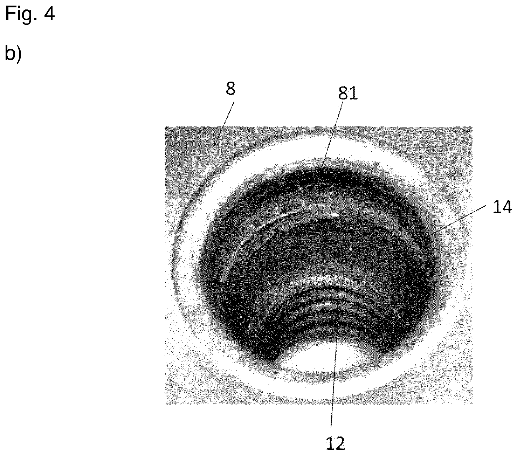

Die so erzielte Verbindung zwischen Mutter 1 und Blech 8 ist in Figur 4 wiedergegeben. Wie in Figur 4a unmittelbar ersichtlich ist der um das Loch befindliche Blechbereich tief entlang der Befestigungskontur 13 der Mutter 1 hinein umgeformt, wobei über den Pressabschnitt 16 hinausfließendes Material vom Auslaufabschnitt 15 aufgenommen ist. Die Schraubengängigkeit der Mutter 1 ist vorliegend gegeben.

## Patentansprüche

1. Mutter zur Befestigung an einem Dünnblech, mit einem Mutternkörper, der mit einem Innengewinde versehen ist, wobei dem Innengewinde (12) vorgelagert eine gegenüber dem Kerndurchmesser des Innengewindes (12) durchmesservergrößerte Befestigungskontur (13) zur Aufnahme von Blechmaterial angeordnet ist und wobei die Befestigungskontur (13) einen Pressabschnitt (16) aufweist, der in einen gegenüber dem Pressabschnitt (16) durchmesserverminderten Auslaufabschnitt (15) übergeht **dadurch gekennzeichnet, dass** der Auslaufabschnitt (15) zylindrisch ausgebildet ist und dass die Befestigungskontur (13) einen sich konisch in Richtung des Innengewindes verjüngenden Zentrierabschnitt (14) aufweist, der sich an das Innengewinde (12) anschließt.

2. Mutter nach Anspruch 1, **dadurch gekennzeichnet, dass** zwischen dem Pressabschnitt (16) und dem Auslaufabschnitt (15) ein Absatz (17) ausgebildet ist.

3. Mutter nach Anspruch 2, **dadurch gekennzeichnet, dass** der Absatz (17) als konisch in Richtung des Außenmantels des Mutternkörpers (11) geneigte Ringfläche ausgebildet ist.

4. Mutter nach einem der Ansprüche 1 bis 3, **dadurch gekennzeichnet, dass** der Pressabschnitt (16) zylindrisch ausgebildet ist.

5. Mutter nach einem der Ansprüche 1 bis 4, **dadurch gekennzeichnet, dass** der Auslaufabschnitt (15) und/oder der Pressabschnitt (16) zumindest bereichsweise mit einer Verzahnung oder Verrippung versehen ist.

6. Mutter nach einem der vorgenannten Ansprüche, **dadurch gekennzeichnet, dass** der Mutternkörper (11) an seiner dem Innengewinde (12) abgewandten Anlagefläche (18) mit einer Verzahnung oder Verrippung versehen ist.

7. Muttern-Blech-Verbindung, umfassend eine Mutter (1) nach einem der Ansprüche 1 bis 6, die auf ein Blech (8) aufgebracht ist, **dadurch gekennzeichnet, dass** in das Blech (8) ein Loch eingestanzt ist, wobei ein das Loch umgebender Bereich in Art eines Kragens (81) in die Befestigungskontur (13) des Mutternkörpers (11) der Mutter (1) eingeformt ist und an dieser anliegt, wodurch die Verbindung bewirkt ist.

## Claims

1. Nut for mounting on a thin metal sheet, having a nut body with an inner thread, where a fastening contour (13) for holding sheet material with a larger diameter in relation to the core diameter of the inner thread (12) is arranged in front of the inner thread (12), and where the fastening contour (13) has a pressing section (16) which passes over into a run-out exit section (15) with a diameter less than that of the pressing section (16), **characterised in that** the run-out section (15) is cylindrical in shape and that the fastening contour (13) has a centring section (14) which tapers conically towards the inner thread and which adjoins the inner thread (12).

2. Nut in accordance with claim 1, **characterised in that** a shoulder (17) is formed between the pressing section (16) and the run-out section (15).

3. Nut in accordance with claim 2, **characterised in that** the shoulder (17) is formed as a circular surface tilting conically towards the outer casing of the nut body (11).

4. Nut in accordance with any of the claims 1 to 3, **characterised in that** the pressing section (16) is cylindrical in shape.

5. Nut in accordance with any of the claims 1 to 4, **characterised in that** the run-out section (15) and/or the pressing section (16) is/are ribbed or serrated at least in a certain area.

6. Nut in accordance with any of the preceding claims, **characterised in that** the body (11) of the nut is ribbed or serrated on its contact surface (18) facing away from the inner thread (12).

7. Connection between a nut and a metal sheet comprising a nut (1) in accordance with any of the claims 1 to 6, for mounting on a metal sheet (8), **characterised in that** a hole is punched in the sheet (8), where an area surrounding the hole in the manner of a collar (81) is formed in the fastening contour (13) of the body (11) of the nut (1) and lies against it thereby achieving the connection.

## Revendications

1. Écrou de fixation sur une tôle mince, comprenant un corps d'écrou doté d'un filetage intérieur, sachant qu'est disposé en amont du filetage intérieur (12) un contour de fixation (13) servant à recevoir la tôle et d'un diamètre plus élevé que le diamètre de l'âme du filetage intérieur (12), et sachant que le contour de fixation (13) présente un segment presseur (16) devenant progressivement un segment de sortie (15) d'un diamètre inférieur à celui du segment presseur (16), **caractérisé en ce que** le segment de sortie (15) est configuré cylindrique et que le contour de fixation (13) présente un segment de centrage (14) qui va en s'amincissant de façon conique en direction du filetage intérieur et qui se raccorde au filetage intérieur (12).

2. Écrou selon la revendication 1, **caractérisé en ce qu'**un talon (17) est configuré entre le segment presseur (16) et le segment de sortie (15).

3. Écrou selon la revendication 2, **caractérisé en ce que** le talon (17) est configuré en forme de surface annulaire conique inclinée en direction de l'enveloppe extérieure du corps (11) d'écrou.

4. Écrou selon l'une des revendications 1 à 3, **caractérisé en ce que** le segment presseur (16) est configuré cylindrique.

5. Écrou selon la revendication 1 à 4, **caractérisé en ce que** le segment de sortie (15) et/ou le segment presseur (16) sont dotés au moins localement d'une denture ou d'un ensemble de nervures.

6. Écrou selon l'une des revendications précédentes, **caractérisé en ce que** le corps d'écrou (11) est doté, sur sa surface d'applique (18) ne regardant pas le filetage intérieur (12), d'une denture ou d'un ensemble de nervures.

7. Jonction écrou/tôle comprenant un écrou (1) selon l'une des revendications 1 à 6 fixé sur une tôle (8), **caractérisée en ce qu'**un trou est poinçonné dans la tôle (8), sachant qu'une zone entourant le trou et ayant la forme d'un col (81) épouse le contour de fixation (13) que présente le corps (11) de l'écrou (1) et applique contre lui, ce qui établit la jonction.
